(19) Europäisches Patentamt / European Patent Office / Office européen des brevets

(11) **EP 2 127 271 B1**

(12) **FASCICULE DE BREVET EUROPEEN**

(45) Date de publication et mention de la délivrance du brevet:
**08.08.2018 Bulletin 2018/32**

(21) Numéro de dépôt: **08762177.7**

(22) Date de dépôt: **29.02.2008**

(51) Int Cl.:
***H04L 12/911*** *(2013.01)*

(86) Numéro de dépôt international:
**PCT/FR2008/050342**

(87) Numéro de publication internationale:
**WO 2008/119914 (09.10.2008 Gazette 2008/41)**

(54) **PROCÉDÉ DE CALCUL DYNAMIQUE D'UNE VALEUR DE DÉBIT MAXIMAL D'UN FLUX DE DONNÉES**

VERFAHREN ZUR DYNAMISCHEN BERECHNUNG EINES MAXIMALEN FLUSSWERTES FÜR EINEN DATENSTROM

METHOD FOR THE DYNAMIC CALCULATION OF A MAXIMUM FLOW VALUE OF A DATA STREAM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.03.2007 FR 0753804**

(43) Date de publication de la demande:
**02.12.2009 Bulletin 2009/49**

(73) Titulaire: **Orange**
**75015 Paris (FR)**

(72) Inventeurs:
- **PENHOAT, Joël**
  **F-22300 Lannion (FR)**
- **TAFASCA, Tarek**
  **97427 Etang Salé Les Hauts**
  **Le Réunion (FR)**
- **BENYEKHLEF, Marouane**
  **CASABLANCA (MA)**

(74) Mandataire: **Cabinet Beau de Loménie**
**158, rue de l'Université**
**75340 Paris Cedex 07 (FR)**

(56) Documents cités:
- **"Access and Terminals (AT); Digital Broadband Cable Access to the Public Telecommunications Network; IP Multimedia Time Critical Services; Part 5: Dynamic Quality of Service for the Provision of Real Time Services over Cable Television Networks using Cable Modems; ETSI TS 101 909-5" ETSI STANDARDS, EUROPEAN TELECOMMUNICATIONS STANDARDS INSTITUTE, SOPHIA-ANTIPO, FR, vol. AT-Digital, no. V111, août 2001 (2001-08), pages 1-241, XP014016109 ISSN: 0000-0001**
- **"UMA Architecture (Stage 2) R1.0.4 (2005-05-02); Unlicensed Mobile Access (UMA); Architecture (Stage 2)" UMA ARCHITECTURE (STAGE 2) R1.0.4, XX, XX, 2 mai 2005 (2005-05-02), XP002394548**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la communication entre terminaux appartenant à des réseaux de communication distincts, par exemple entre un terminal appartenant à un réseau de communication mobile local privé et un terminal appartenant à un réseau de communication large bande administré par un opérateur.

Plus précisément, l'invention concerne le contrôle de l'établissement d'une nouvelle communication entre de tels terminaux, en fonction du niveau de la qualité de service offert par les réseaux hébergeant ces terminaux, à un instant donné.

L'invention s'applique notamment, mais non exclusivement, à une architecture réseau du type UMA (pour "Unlicensed Mobile Access" en anglais, pour "mobile à libre accès" en français). Une telle architecture permet en effet à un usager d'utiliser son téléphone mobile sur un réseau local IP (pour "Internet Protocol" en anglais, ou "protocole Internet" en français), lorsqu'il est chez lui, au bureau ou, plus généralement, lorsqu'il se situe dans une zone couverte par un point d'accès d'un réseau IP mobile local privé, plutôt que d'utiliser le réseau fixe ou mobile payant d'un opérateur.

Une telle approche selon la norme UMA offre pour avantage de diminuer sensiblement les coûts de communication, d'autant plus pour entreprise au sein de laquelle le nombre des communications passées par ses collaborateurs est souvent important. Le document ETSI TS 101 909-5 concerne l'accès par câble numérique à un réseau de télécommunications public et traite l'aspect qualité de service pour la fourniture de services temps réel sur des réseaux de télévision par câble utilisant des modems câble. A titre de simple exemple illustratif et non limitatif, la mise en oeuvre d'une architecture réseau conçue selon la norme UMA permet donc de prolonger les services mobiles GSM/ GPRS dans les réseaux sans fils IP libres d'accès (Wi-Fi™ ou Bluetooth™ notamment) en créant un tunnel de communication, directement entre un terminal de communication client et le coeur du réseau de l'opérateur, dans l'objectif :

- de permettre à l'usager d'utiliser des services mobiles voix et données par l'intermédiaire de réseaux privés en conservant le même numéro de téléphone ;
- de supporter le passage d'un réseau privé à un réseau GSM et réciproquement, sans coupure ;
- d'être indépendant de la technologie utilisée pour les réseaux privés, par exemple du type Wi-Fi™ ou Bluetooth™, tout en étant également transparent pour les équipements existants dans les réseaux privés ;
- d'assurer une sécurité équivalente aux réseaux GSM.

Dans le cadre d'une architecture réseau UMA de type résidentiel (par exemple celle déployée dans le cadre de l'offre Unik - marque déposée, de l'opérateur Orange - marque déposée), lorsqu'un appel sortant est généré par un terminal de communication de type GSM/ GPRS sur le réseau Wi-fi (marque déposée), une prise de décision s'opère d'une façon relativement simple, selon des critères préalablement définis par l'opérateur de téléphonie mobile.

Si au moment de l'appel, le terminal se situe dans la zone de couverture de sa passerelle Wi-Fi formant point d'accès unique au réseau de l'opérateur, alors la communication Wi-fi est prolongée via le coeur de réseau de l'opérateur, jusqu'au terminal distant auquel l'appel est destiné.

Dans le cas contraire, l'appel sortant est basculé automatiquement et sans coupure (communément dénommé procédure de "handover") sur le réseau GSM payant de l'opérateur.

Or, une telle prise de décision s'avère incompatible avec la mise en oeuvre d'une architecture réseau UMA de type entreprise. En effet, dans une telle architecture, la passerelle de communication sert d'interface entre le réseau mobile local privé (de type IP, par exemple) de l'entreprise et le réseau de communication de l'opérateur. La passerelle doit donc superviser et gérer simultanément une pluralité de points d'accès au réseau local mobile, respectivement répartis sur le site de l'entreprise et, doit en outre assurer la gestion d'un grand nombre de communications d'un parc important de terminaux de communication mobile associés aux collaborateurs de l'entreprise.

Or, il s'avère que le nombre maximal de flux VoIP ("Voix over IP" en anglais, ou "Voix sur IP" en français) que peut transmettre un réseau de communication à un moment donné, et plus particulièrement dans une architecture UMA, est un paramètre important représentatif du niveau de qualité de service (QoS) perçu par les utilisateurs.

En effet, lorsque le nombre de flux VoIP transitant sur le réseau à un instant donné dépasse ce nombre maximal de flux VoIP, la QoS offerte aux usagers se dégrade sensiblement.

Aussi, un inconvénient d'une architecture UMA comprenant plusieurs terminaux mobiles (par exemple du type GSM, GPRS) pouvant se connecter à plusieurs points d'accès (AP) gérés par une passerelle de communication unique (dite passerelle UMA) permettant d'interfacer le réseau IP local privé de l'entreprise avec le coeur de réseau d'un opérateur, est principalement lié à la difficulté de pouvoir garantir et maintenir une QoS constante auprès des utilisateurs, notamment en cas d'afflux important de communication à un instant ou sur une période donnée.

En effet, du nombre important des communications générées dans l'entreprise au quotidien, le nombre maximal de flux VoIP autorisé par l'opérateur sera souvent atteint, avec pour conséquence une dégradation de la qualité des communications qui transiteront via la passerelle de communication UMA.

Pour tenter de répondre à cet inconvénient, certaines approches techniques consistent à évaluer le nombre maximal de flux VoIP pouvant transiter à un instant donné, sur la partie WAN (pour "Wide Area Network" en anglais, ou "réseau large bande" en français) de l'architecture UMA, c'est-à-dire côté coeur de réseau de l'opérateur uniquement.

Une telle approche selon l'art antérieur s'avère cependant limitée en ce qu'elle apporte une réponse uniquement partielle aux inconvénients précités.

En effet, s'il est aujourd'hui possible à un opérateur de déterminer le nombre maximal de flux VoIP pouvant transiter sur la partie WAN de son réseau, soit d'une façon statique par récupération d'une valeur de paramétrage prédéfinie de valeur maximale de flux VoIP autorisée, soit d'une façon dynamique, au moyen d'un algorithme de type CAC (pour "Call Admission Control" en anglais, ou "contrôle d'admission d'une communication" en français), dans l'objectif d'évaluer la possibilité d'ajouter un nouveau flux sur celui-ci, il lui est en revanche impossible de pouvoir évaluer l'impact de l'ajout d'un tel nouveau flux, de bout en bout, à la fois sur la partie WAN, mais surtout sur la partie WLAN d'un réseau mobile privé. Or, le plus souvent, la dégradation de la QoS des communications dans une architecture UMA d'entreprise provient d'une surcharge de la partie réseau mobile privé de cette dernière.

De plus, dans les architectures UMA, le calcul dynamique du nombre de flux VoIP n'existe pas, la norme WMM™ (pour "Wireless Multimedia" en anglais, ou "multimédia sans fil" en français) qui vise à définir des critères et méthodes pour améliorer la qualité de service rendue aux usagers en matière de communication sans fil, précisant à son paragraphe 3.5.2 (Version 1.1 - Wi-Fi Alliance Technical Committee Quality of Service Task Group) qu'une méthode de détermination de la valeur maximale de flux VoIP dans une architecture UMA doit être définie par chaque équipementier.

Cette situation contribue à la difficulté rencontrée aujourd'hui, par les opérateurs et les équipementiers, de pouvoir proposer aux entreprises des offres performantes et attractives de téléphonie basées sur une architecture de type UMA.

L'invention est définie selon la revendication indépendante 1. Des modes de réalisation particuliers de l'invention sont définis selon les revendications dépendantes pour résoudre les inconvénients précités. Les inventeurs ont proposé un procédé de communication permettant de calculer et de contrôler le nombre maximum des flux VoIP pouvant transiter à un instant donné et/ou sur une période donnée, aussi bien sur la partie WLAN, que sur la partie WAN (réseau GSM/GPRS d'un opérateur de téléphonique mobile) et donc, de bout en bout dans une architecture réseau répondant à la norme UMA.

Un tel procédé offre pour avantage, par rapport aux solutions connues de l'art antérieur, de permettre un contrôle efficace de l'admission ou de refus de tout nouveau flux de données représentatif d'une nouvelle communication (flux VoIP notamment), et donc, permet d'assurer aux usagers une constance du niveau de qualité de service qui leur est offert durant leurs communications, au travers une architecture UMA, notamment mise en oeuvre au sein d'une entreprise.

Ce procédé de communication (développé par les inventeurs) entre au moins un premier terminal de communication appartenant à un premier réseau de communication et au moins un deuxième terminal de communication appartenant à un deuxième réseau de communication, lesdits premier et deuxième réseaux étant reliés entre eux via un dispositif d'interface, comprend avantageusement :

- une étape de calcul dynamique d'un nombre maximal de flux de données pouvant transiter entre les premier et deuxième terminaux, le calcul tenant compte de débits observés dans les premier et deuxième réseaux ; et
- une étape de traitement d'une requête d'admission d'un nouveau flux de données sur les premier et deuxième terminaux, ce traitement étant destiné à être exécuté par le dispositif d'interface en tenant compte du résultat de l'étape de calcul.

Il permet, dans une architecture réseau du type UMA, lorsqu'un premier terminal appartenant à un premier réseau de communication, par exemple du type réseau IP mobile privé WLAN, souhaite établir une nouvelle communication avec un deuxième terminal d'un deuxième réseau de communication, par exemple du type réseau WAN large bande, d'évaluer de bout en bout la disponibilité des ressources disponibles sur le premier et sur le deuxième réseau de communication. Ainsi, en fonction du résultat de cette évaluation, si l'un au moins des deux réseaux ne dispose pas des ressources disponibles, en bande passante notamment, pour laisser passer le flux de données (par exemple de données voix) nécessaire au support de la nouvelle communication, alors on bascule sans coupure cette dernière sur le réseau mobile d'un opérateur.

Dans un mode de réalisation préféré du procédé de communication précité, l'étape de traitement est une étape d'analyse dynamique d'au moins un critère de disponibilité associé respectivement à chacun desdits réseaux, telle que :

- si chaque réseau est disponible pour recevoir ledit nouveau flux de données, on réserve, par l'intermédiaire dudit dispositif d'interface, un tunnel de communication dimensionné en fonction du débit nécessaire au support dudit nouveau flux de données, de bout en bout entre ledit premier et ledit deuxième terminal ; et
- si au moins un desdits réseaux n'est pas disponible, on aiguille sans coupure ledit nouveau flux de données vers un réseau de communication mobile.

Cette étape de réservation dudit tunnel de communication comprend au moins une étape préalable de calcul du débit maximum dudit nouveau flux de données, en fonction d'au moins une donnée représentative du codec dudit premier ou deuxième terminal, notamment le nombre de paquets par seconde émis par celui-ci et son débit maximal en bits par seconde (bps).

Par conséquent, les caractéristiques du codec d'un terminal s'avèrent indispensables pour un calcul optimal du débit maximal d'un flux UMA voix, d'autant plus dans une architecture de type UMA, résidentiel ou mise en oeuvre à plus grande échelle dans une entreprise.

Or, à ce jour, il n'existent aucune technique qui permettent de tenir compte des caractéristiques du codec d'un terminal pour le calcul du débit maximal nécessaire à l'établissement d'un nouveau flux de données voix, particulièrement dans le cadre d'une architecture de type UMA.

Pour pallier à cette situation, le consortium 3GPP (marque déposée) préconise d'utiliser les valeurs de débit et de nombre de paquets par seconde émis par le codec AMR - "Adaptive Multi-Rate" (pour "à taux multiple adaptatif") (Cf. "Technical Specification Group GSM/EDGE Radio Access Network; Generic Access to the A/Gb interface; étape 2, Version 6, janvier 2006), seul codec aujourd'hui implémenté dans les téléphones mobiles de troisième génération (GPRS, UMTS, ...) utilisés dans les architectures de communication de type UMA (résidentielles ou d'entreprise) proposées aux utilisateurs.

Un premier inconvénient de cette situation est donc lié au fait que le calcul du débit maximal d'un nouveau flux UMA voix dans le procédé de communication précité, n'aura de sens que si des terminaux mobiles implémentant le codec AMR sont effectivement utilisés dans l'architecture UMA.

Aussi, un deuxième inconvénient de cette situation, induit par le premier, concerne donc le fait que la constance du niveau de qualité de service que l'on cherche à garantir et à maintenir auprès des utilisateurs, au sein d'une architecture UMA résidentielle ou d'entreprise, ne pourra en aucun cas être assurée, dès lors que des terminaux mobiles autres que des terminaux mettant en oeuvre le codec AMR seront utilisés.

La présente invention offre une solution qui ne présente pas les inconvénients mentionnés ci-avant

L'invention vise à résoudre les inconvénients précités en proposant un procédé permettant de calculer et de contrôler le nombre maximum des flux VoIP pouvant transiter à un instant donné et/ou sur une période donnée, aussi bien sur la partie WLAN, que sur la partie WAN (réseau GSM/ GPRS d'un opérateur de téléphonique mobile) et donc, de bout en bout dans une architecture réseau répondant à la norme UMA, qui soit en outre parfaitement indépendant des codecs utilisés et/ou mis en oeuvre par les terminaux de communications utilisés.

Il s'agit notamment au moyen de la présente invention de pouvoir contrôler l'admission ou le refus de tout nouveau flux de données représentatif d'une nouvelle communication (flux VoIP notamment), dans l'objectif d'assurer aux usagers une constance du niveau de qualité de service qui leur est offert durant leurs communications, au travers une architecture UMA, quelque soit le codec utilisé par leur terminal de communication.

A cet effet, l'invention concerne un procédé de calcul dynamique d'une valeur de débit maximal d'un flux de données devant transiter entre un premier terminal de communication et un deuxième terminal de communication.

Selon l'invention, un tel procédé comprend avantageusement une étape de prise en compte d'au moins un paramètre représentatif d'une opération de codage-décodage appliquée audit flux de données, ladite opération étant exécutée par un codeur-décodeur (ou plus communément appelé "codec") associé audit premier terminal.

Une telle approche technique s'avère à la fois nouvelle et inventive en ce qu'elle autorise désormais, notamment dans une architecture UMA (mais non exclusivement), un calcul optimal et dynamique du débit maximal d'un nouveau flux de données, par exemple de données voix, quel que soit le type de codeur-décodeur (couramment dénommé "codec") mis en oeuvre par le terminal de communication devant émettre ou recevoir ce nouveaux flux, le terminal appartenant par exemple un réseau de communication IP mobile privé d'une architecture UMA.

Dans une variant du procédé selon l'invention, ledit procédé comprend une étape de prise en compte d'au moins un paramètre représentatif du type dudit codeur-décodeur.

Dans une autre variante du procédé selon l'invention, ledit procédé comprend une étape de prise en compte d'au moins un paramètre représentatif d'un mode de fonctionnement dudit codeur-décodeur.

Dans un mode de réalisation préféré de l'invention, ladite étape de prise en compte inclut avantageusement une étape d'interrogation d'au moins une table indiquant pour chaque terminal connecté et identifié de manière unique, au moins une valeur dudit au moins un paramètre représentatif d'une opération de codage-décodage appliquée audit flux de données associé audit premier terminal.

Il est bien entendu qu'une telle table peut aussi contenir, de façon complémentaire ou alternative, au moins un paramètre représentatif du type de codeur-décodeur associé audit premier terminal pour traiter ledit flux de données, ou bien encore au moins un paramètre représentatif d'un mode de fonctionnement d'un codeur-décodeur associé audit premier terminal pour traiter ledit flux de données.

Une telle approche contribue au maintien de la qualité de service rendue aux usagers en ce qu'il est possible d'interroger rapidement la table pour y récupérer les informations relatives au codeur-décodeur du premier terminal et pour ainsi calculer la valeur de débit maximum nécessaire pour la transmission d'un nouveau flux de données, par exemple du type UMA voix, entre le premier et deuxième terminal

Préférentiellement, ledit premier terminal (13) appartenant à un premier réseau (10) de communication et ledit deuxième terminal (14) appartenant à un deuxième réseau (11) de communication, lesdits premiers (10) et deuxième (11) réseaux de communication sont reliés entre eux via un dispositif (12) d'interface incluant une table centrale comprenant pour chaque terminal (13) connecté audit premier réseau (10) :

- une adresse de connexion dudit premier terminal (13) sur ledit premier réseau de communication;
- une adresse d'un point d'accès auquel ledit premier terminal (13) est connecté;
- au moins un paramètre représentatif d'un codeur-décodeur dudit flux de données associé audit terminal (13) de communication.

Un tel dispositif d'interface permet de centraliser dans une table centrale l'information concernant chacun des codeurs-décodeurs associés à chacun des terminaux du premier réseau de communication, de façon à pouvoir rendre cette information rapidement disponible auprès des différents points d'accès audit premier réseau.

De façon avantageuse, ladite table centrale est mise à jour dynamiquement au moyen d'un message de sollicitation adressé par un premier terminal (13) audit dispositif (12) d'interface, ledit message comprenant au moins les champs d'information suivants:

- un identifiant d'un codeur-décodeur dudit flux de données associé audit terminal (13) émetteur dudit message ;
- une valeur de temps nécessaire audit codeur-décodeur associé audit terminal (13) émetteur, pour encoder-décoder chacun des paquets de données de taille prédéterminée formant ledit flux de données ;
- une valeur représentative du nombre d'octets correspondant à chacun desdits paquets de données de taille prédéterminée que ledit codeur-décodeur associé audit terminal (13) émetteur doit encoder-décoder.

Une telle approche selon l'invention permet par exemple qu'un message du type DHCP, de demande de réservation de ressources par un premier terminal appartenant au premier réseau auprès d'un point d'accès ou auprès du dispositif d'interface, soit enrichi des informations relatives au codeur-décodeur, ces informations étant destinées à une mise à jour de la table centrale.

Préférentiellement, ledit premier réseau comprenant une pluralité de points d'accès accessibles audit premier terminal, chacun desdits points d'accès inclut une table locale comprenant:

- une adresse de connexion dudit premier terminal sur ledit premier réseau de communication;
- au moins un paramètre représentatif d'un codeur-décodeur dudit flux de données associé audit terminal.

Une telle approche permet à chaque point d'accès du premier réseau de communication, de connaître les caractéristiques principales du codeur-décodeur associé à chacun des terminaux de communication qui lui sont connectés, ou bien qui se trouvent dans sa zone de couverture.

Dans un mode de réalisation préféré de l'invention, lorsque ledit message de sollicitation est porteur d'une demande de réservation de ressources qui ne peut être satisfaite pour l'émission d'un flux de données par un point d'accès émetteur dudit message, une étape d'émission automatique d'un message de sollicitation de ressource par au moins un autre point d'accès auquel ledit terminal de communication peut se connecter est déclenchée.

Ainsi, avant de basculer la connexion entre le premier et le deuxième terminal de communication sur un réseau de communication mobile d'un opérateur (procédure de "handover"), on vérifie préalablsement qu'il n'existe pas d'autre point d'accès disponible au sein du premier réseau de communication, qui soit en mesure d'assurer la transmission du nouveau flux de données de type UMA voix entre le premier et le deuxième terminal de communication, sans dégradation de la qualité de service des communications déjà établies par l'intermédiaire de cet autre point d'accès.

De façon avantageuse, si ladite table locale dudit point d'accès auquel ledit terminal est connecté ne contient pas au moins un paramètre représentatif d'un codeur-décodeur dudit flux de données associé audit terminal, ledit point d'accès émet une requête de récupération dudit paramètre à destination dudit dispositif d'interface, pour récupérer dans ladite table locale, les données correspondantes contenues dans ladite table centrale dudit dispositif d'interface.

Préférentiellement, ledit premier terminal de communication étant conforme au standard UMA, ledit flux de données transitant entre ledit premier terminal de communication et ledit deuxième terminal de communication est un flux de données voix au format UMA.

L'invention concerne également un dispositif de calcul dynamique du débit maximal d'un flux de données devant transiter entre un premier terminal de communication et un deuxième terminal de communication.

Selon l'invention, un tel dispositif comprend avantageusement des moyens de prise en compte d'au moins un paramètre représentatif d'une opération de codage-décodage dudit flux de données, ladite opération étant exécutée par un codeur-décodeur associé audit premier terminal.

L'invention concerne aussi un système de communication entre au moins un premier terminal de communication appartenant à un premier réseau de communication et au moins un deuxième terminal de communication appartenant à un deuxième réseau de communication, lesdits premier et deuxième réseaux étant reliés entre eux via un dispositif d'interface.

Selon l'invention un tel système comprend de façon avantageuse :

- des moyens de calcul dynamique d'une valeur de débit maximal de flux de données devant transiter entre ledit premier et ledit deuxième terminal de communication, lesdits moyens de calcul tenant compte d'au moins une valeur de débits observée dans ledit premier et/ou deuxième réseaux et mettant en oeuvre un procédé de calcul dynamique précité ;
- des moyens de traitement d'une requête d'admission d'un nouveau flux de données devant transiter entre lesdits premier et deuxième terminaux de communication, lesdits moyens traitement étant contenus dans ledit dispositif d'interface et tenant compte du résultat produit par lesdits moyens de calcul.

Préférentiellement, ledit premier terminal de communication étant conforme au standard défini par la norme UMA, ledit flux de données devant transiter entre ledit premier (13) et ledit deuxième (14) terminal de communication est du type flux de données voix au format UMA.

L'invention concerne encore un produit programme d'ordinateur téléchargeable depuis un réseau de communication et/ou stocké sur un support d'information lisible par ordinateur et/ou exécutable par un microprocesseur, un tel produit programme d'ordinateur comprenant des instructions de code pour l'exécution d'un procédé de calcul dynamique tel que précité.

Les caractéristiques et avantages techniques de la présente invention ressortiront mieux de la description suivante, faite à titre indicatif et non limitatif, au regard des dessins annexés sur lesquels:

- la figure 1 est une vue schématique d'une architecture UMA dans laquelle sont mis en oeuvre un système et un procédé de calcul dynamique du débit maximal d'un flux de données ;
- la figure 2 est un ordinogramme d'un mode de mise en oeuvre du procédé de communication selon l'invention, dans le cas d'un appel entrant;
- la figure 3 est un ordinogramme d'un mode de mise en oeuvre du procédé de communication selon l'invention, dans le cas d'un appel sortant.

La présente invention propose une solution qui permet, dans une architecture réseau du type UMA, lorsqu'un premier terminal appartenant à un premier réseau de communication, par exemple du type réseau IP mobile privé WLAN, souhaite établir une nouvelle communication avec un deuxième terminal d'un deuxième réseau de communication, par exemple du type réseau WAN large bande, d'évaluer de bout en bout la disponibilité des ressources disponibles sur le premier et sur le deuxième réseau de communication. Ainsi, en fonction du résultat de cette évaluation, si l'un au moins des deux réseaux ne dispose pas des ressources disponibles, en bande passante notamment, pour laisser passer le flux de données (par exemple de données voix) nécessaire au support de la nouvelle communication, alors on bascule sans coupure cette dernière sur le réseau mobile d'un opérateur.

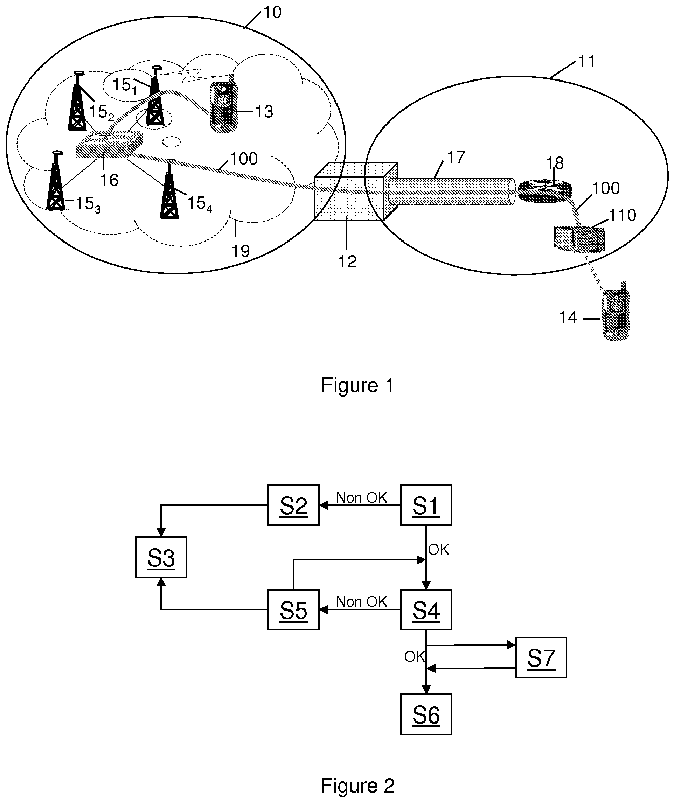

La figure 1 illustre une architecture réseau du type UMA dans laquelle l'invention peut être mise en oeuvre. Une telle architecture comprend une première partie 10 correspondant à un premier réseau 10 de communication local sans fil, dit réseau WLAN, par exemple du type réseau IP mobile local privé et, une deuxième partie 11, correspondant à la partie coeur de réseau, du réseau WAN d'un opérateur. Un équipement matériel 12 formant dispositif d'interface permet de prolonger les services de communication entre le réseau 10 WLAN et le réseau 11 WAN, notamment pour ce qui concerne les communications établies entre un premier terminal 13 de radiocommunication du réseau WLAN et un deuxième terminal 14 de communication distant, atteint par l'intermédiaire d'au moins un équipement 18 de collecte et/ou de routage, et/ou d'au moins une passerelle 110 sécurisé, du réseau WAN.

Le réseau 10 WLAN comprend une pluralité de points $15_1$, $15_2$, $15_3$, $15_4$ d'accès reliés au dispositif 12 d'interface par l'intermédiaire d'un commutateur 16 de type Ethernet, l'ensemble des points d'accès, y compris le dispositif 12 d'interface, définissant une zone 19 de couverture (dite "business zone" selon la terminologie anglophone communément adoptée) pour le réseau 10 IP local mobile, au sein de laquelle les terminaux 13 de communication sont reconnus.

Les terminaux 13 sont conformes à la norme UMA (Technical Specification Group GSM/EDGE Radio Access Network; Generic Access to the A/Gb interface; Stage 2 - version 6- janvier 2006) et la "business zone" 19 est conforme à la norme WMM (WMM™ - Version 1.1 - Wi-Fi Alliance Technical Committee Quality of Service Task Group).

La "Business Zone" 19 possède un serveur DHCP situé sur le dispositif 12 d'interface. Le dispositif 12 d'interface effectue du NAT (1 vers N) sur son interface WAN.

L'adresse IP source d'un paquet IPsec (sécurisé) transmis par un terminal 13 UMA à destination d'une passerelle sécurisée 110 du réseau 11 WAN, provient de la plage d'adresses IP administré par le serveur DHCP de la "Business Zone" 19.

Un canal 17 virtuel conversationnel (CV) de communication est établi sur la partie 11 WAN de l'architecture UMA, entre le dispositif 12 d'interface et un équipement 18 de collecte et de routage du réseau 11 WAN, ce dernier formant point d'entrée du point de présence (PoP) multiservices, dont le service de voix sur IP.

L'établissement d'une connexion sécurisée entre un terminal 13 et la passerelle 110 sécurisée nécessite *(i)* la détection de la présence de la fonction NAT sur l'interface WAN du dispositif d'interface et *(ii)* l'authentification des deux extrémités de la connexion. La connexion sécurisée est établie suivant le protocole IKEv2.

Les différentes étapes d'établissement d'une connexion sécurisée entre le terminal 13 et la passerelle 110 sécurisée du réseau WAN ne sont pas détaillées ici.

En se référant à l'architecture de la figure 1, le nombre maximal de flux UMA voix pouvant transiter de bout en bout sur le premier 10 et deuxième 11 réseau de communication, correspond sensiblement au minima entre (i) le nombre maximal de flux UMA voix que peut transmettre le CV 17 conversationnel et *(ii)* le nombre maximal de flux UMA voix que peut transmettre la "business zone" 19.

Le CV 17 conversationnel transmet les flux de téléphonie fixe, les flux UMA voix, les flux d'établissement et de maintien des connexions sécurisées, ainsi que d'autres flux UMA de données transitant sur la partie 12 du réseau WAN.

A un instant *t,* le nombre maximal de flux UMA voix que peut transmettre le VC conversationnel est appelé CAC UMA CV conversationnel. Il est calculé en sens montant ("uplink") ou descendant ("downlink"), car il est bidirectionnel.

En outre, chaque réseau local mobile, par exemple de type Wifi, présent dans la "business zone" 19 peut transmettre des flux UMA voix, des flux d'établissement et de maintien des connexions sécurisées, ainsi que d'autres flux divers UMA et/ou de données.

Au même instant *t,* le nombre maximal de flux UMA voix que peut transmettre un réseau Wifi de la "business zone" 19 est appelé CAC UMA WLAN. Il est aussi calculé en sens montant ("uplink") ou en sens descendant ("downlink"), car il est également bidirectionnel.

Le nombre maximal de flux UMA voix dans une architecture UMA, telle que celle représentée sur la figure 1, dépend donc du CAC UMA CV conversationnel et du CAC UMA WLAN.

a) Calcul du CAC UMA CV conversationnel :

Le calcul du CAC UMA VC conversationnel nécessite la connaissance *(i)* du débit du CV conversationnel *(ii)* et du débit d'un flux UMA voix. Les débits sont calculés au niveau ATM (pour "Asynchronous Transfer Mode" en anglais, c'est-à-dire "mode de transfert asynchrone" en français).

A l'instant *t,* le nombre maximal de flux transmis sur le CV 17 conversationnel est tel que :

$$(\text{Débit du VC conversationnel})(t) = (\text{Débit des flux de téléphonie fixe})(t) +$$
$$(\text{Débit des flux UMA voix})(t) + (\text{Débit des flux UMA data})(t) + (\text{Débit des flux}$$
$$\text{d'établissement des tunnels IPsec})(t) + (\text{Débit de maintien des tunnels IPsec})(t).$$

A l'instant *t,* le nombre maximal de flux UMA est tel que :

$$(\text{Débit des flux UMA})(t) = (\text{Débit du VC conversationnel})(t) - (\text{Débit des flux de}$$
$$\text{téléphonie fixe})(t), \text{noté par simplification Dvc} - \text{Dtoip}(t).$$

A un instant $t_k,$ le CV 17 conversationnel transmet (k -1) flux UMA voix.

Ainsi, la possibilité d'ajouter le flux UMA voix numéro *k* nécessite donc de connaître quel débit maximal va occuper ce flux k sur le CV 17 conversationnel, côté réseau WAN.

Le débit au niveau ATM du flux UMA voix numéro *k,* noté "débit du flux UMA voix n° *k*", est égal au nombre de paquets par seconde émis par le codec multiplié par la longueur d'un paquet au niveau ATM, le codec du flux UMA voix numéro *k* étant lui-même caractérisé par les deux paramètres suivants :

- Rk : nombre de paquets par seconde émis par le codec;
- (débit du codec)$_k$ : débit maximal du codec en bps.

Aussi obtient-on la formule suivante de calcul du débit maximal du flux UMA voix n° *k*, noté (débit du flux UMA voix n° *k*)$_{max}$, lorsque le codec ne fait pas de VAD, c'est-à-dire que, lorsque (débit du codec(t))$_k$ = (débit du codec)$_k$ :

$$(\text{débit du flux UMA voix n° } k)\max =$$

$$R_k*(\ (\text{débit du codec})_k / R_k + \text{longueur (entête (PLCP-MAC-CCMP-LLC-IPsec-IP)}\ ) +$$

$$\text{longueur(trame d'acquittement)} + \text{SIFS} * \text{Dwlan}) + (Rk(t)–1) * \text{SIFS} * \text{Dwlan} +$$

$$(\text{TIME\_FOR\_THE\_CLASS\_TO\_TRANSMIT})_k * \text{Dwlan} ;$$

où :

- les bits n'appartenant pas au champ de VoIP sont notés "entête(PLCP-MAC-CCMP-LLC-IPsec-IP)";
- Dwlan correspond au débit sur le réseau WLAN;
- selon le paragraphe "Obtaining an EDCA TXOP" de la spécification WMM™ (WMM™ - Version 1.1, Wi-Fi Alliance Technical Committee Quality of Service Task Group), l'autorisation à transmettre un nouveau flux correspond au temps que doit attendre la classe AC_VO (classe correspondant à la catégorie d'accès de type "voix") avant de pouvoir transmettre ses trames protocolaires PLCP sur le réseau Wifi. Cette durée est notée (TIME_FOR_THE_CLASS_TO_TRANSMIT)$_k$.

Les caractéristiques du codeur-décodeur (codec) d'un terminal sont indispensables au calcul du débit maximal d'un flux UMA voix.

L'invention offre une méthode dynamique d'acquisition des caractéristiques d'un codeur-décodeur (couramment dénommé "codec") qui permet le calcul du débit maximal d'un flux UMA voix quel que soit le type de codeur-décodeur utilisé par le terminal émetteur/ récepteur.

Pour ce faire, chaque point d'accès dudit premier réseau, ainsi que le dispositif d'interface possèdent une table indiquant, pour chaque terminal connecté, les caractéristiques de son codeur-décodeur (codec). Cette table est appelée "table des codecs des terminaux".

La Table des codec des terminaux du dispositif d'interface est constituée d'une série d'index contenant *(i)* les adresses IP des terminaux UMA, *(ii)* les adresses IP des points d'accès (AP) *(iii)* et les caractéristiques de leur codec.

L'adresse MAC (pour "Message Authentication Code" en anglais, ou code d'authentification de message, en français) d'un terminal UMA constitue un index.

La table des codec des terminaux d'un point d'accès est également constituée d'une série d'index contenant *(i)* les adresses IP des terminaux UMA *(ii)* et les caractéristiques de leur codec. L'adresse MAC d'un terminal UMA constitue un index.

L'adresse MAC d'un terminal UMA et les caractéristiques de son codec proviennent des messages DHCPREQUEST ou DHCPINFORM émis par le terminal à destination du serveur DHCP du dispositif d'interface.

De tels messages contiennent l'option "Vendor class identifier" spécifiée dans la spécification RFC 2132 (Dynamic Host Configuration Protocol, mars 1997), ainsi que dans la recommandation UIT-T H.610 (VDSL tous services-Architecture système et équipements des locaux clients, Juillet 2003). Ils sont définis par association des champs d'informations suivants :

<FSVDSL><type de service><identificateur du fabricant><numéro du modèle>

où :

- le champ <FSVDSL> contient les six caractères "FSVDSL" suivi par le caractère ".";
- le champ <type de service> contient les trois caractères "UMA" suivi par le caractère ".";
- le champ <identificateur du fabricant> contient l'identifiant du fabricant du terminal attribué par l'IEEE;
- le champ <numéro du modèle> contient l'identifiant du terminal attribué par son fabricant.

Conformément au procédé et système selon l'invention, les caractéristiques du codec du terminal UMA sont ajoutées à la suite des quatre champs composant l'option "Vendor class identifier", de 1&a façon suivante:

<FSVDSL><type de service><identificateur du fabricant><numéro du modèle><identifiant du codec><nombre de paquets par seconde><débit du codec> où :

- le champ <identifiant du codec> constitué d'une chaîne de caractères suivi par le caractère ".", identifie le codec du terminal UMA émetteur du message ;

- le champ <nombre de paquets par seconde>, codé sur deux octets, contient la valeur de R de nombre de paquets par seconde pouvant être émis par le codec du terminal émetteur du message;
  - le champ <débit du codec>, codé sur deux octets, contient le débit du codec en bits par seconde (bps).

Un index de la Table des codec des terminaux a une durée de vie, contient l'adresse IP du terminal, l'adresse IP de l'AP auquel est connecté ce terminal, et les champs <identificateur du fabricant><numéro du modèle><identifiant du codec><nombre de paquets par seconde><débit du codec>.

Le champ adresse IP du point d'accès n'est pas présent dans la Table des codecs des terminaux d'un point d'accès, alors qu'il est présent dans la table des codecs contenue dans le dispositif d'interface.

Lorsqu'un terminal UMA émet un message de requête DHCP ou un message de demande d'information DHCP, le dispositif d'interface et le point d'accès auquel est connecté le terminal UMA peuvent mettre à jour leur table des codecs des terminaux.

La valeur du champ "adresse IP" du point d'accès (AP) est obtenue lorsque l'AP auquel est connecté le terminal transmet un message "ADD AP IP ADDRESS in CODEC TABLE IN BLB request" (où BLB correspond au dispositif d'interface) à destination du dispositif d'interface.

Après avoir mis à jour ce champ, le dispositif d'interface transmet en retour un message "ADD AP IP ADDRESS in CODEC TABLE IN BLB response" à destination du point d'accès à l'origine de la requête.

Après avoir transmis un message d'acquittement "DHCP" au terminal UMA, le serveur DHCP du dispositif d'interface demande à ce dernier la mise à jour de sa table des codecs des terminaux, via le message "ADD codec in CODEC TABLE IN BLB".

Lorsque le dispositif d'interface reçoit un message "ADD codec in CODEC TABLE IN AP request" (où AP correspond au point d'accès), elle émet un message de réponse "ADD codec in CODEC TABLE IN AP response" contenant les données de mise à jour de la table des codec des terminaux du point d'accès ayant émis la requête.

Après avoir transmis un message d'acquittement "DHCP" au terminal UMA, le serveur DHCP du dispositif d'interface demande à ce dernier la mise à jour de sa table des codecs des terminaux, via le message "ADD codec in CODEC TABLE IN BLB".

Lorsque le terminal se connecte à un nouveau point d'accès (par exemple à la suite d'un déplacement du terminal dans la zone de couverture du réseau mobile IP privé d'entreprise), ce nouveau point d'accès transmet un message de requête "ADD AP IP ADDRESS in CODEC TABLE IN BLB request" pour actualiser la valeur du champ adresse IP du point d'accès dans la table des codecs du dispositif d'interface. Après avoir mis à jour ce champ, le dispositif d'interface transmet un message de réponse "ADD AP IP ADDRESS in CODEC TABLE IN BLB response" à destination du point d'accès à l'origine de la requête.

b) Ajout du flux n° *k* sur le CV 17 conversationnel :

On suppose que le flux UMA voix n° i est transmis sur le CV 17 conversationnel depuis un instant *ti*. Le débit du flux UMA voix n° i, mesuré entre les instants *ti* et *tk,* est alors égal à :

$$(\text{débit du flux UMA voix n° i})_{\text{mesuré entre } [ti,\ tk]} = (\text{nombre de bits du flux UMA voix n°}$$
$$\text{i})_{\text{mesuré entre } [ti,\ tk]} / (t_k - t_i).$$

L'addition des (k - 1) flux est notée $\Sigma i = \text{SIGMA} (i = 1, i = k-1)$.

A l'instant *tk* l'ajout du flux UMA voix n° *k* (identifié de façon unique) sur le CV 17 conversationnel est possible si l'équation *EQ1* suivante est vérifiée :

$$\Sigma i\ (\text{débit du flux UMA voix n° i})_{\text{mesuré en uplink entre } [ti,\ tk]} + \Sigma i\ (\text{débit du flux UMA}$$
$$\text{voix n° i})_{\text{mesuré en downlink entre } [ti,\ tk]} + 2*(\text{débit du flux UMA voix n° k})_{\text{max}} < (\text{Dvc} -$$
$$\text{Dtoip(t)})_{\text{uplink}} + (\text{Dvc} - \text{Dtoip(t)})_{\text{downlink}}.$$

c) Calcul du CAC UMA WLAN :

Le calcul du CAC UMA WLAN nécessite la connaissance *(i)* du débit du réseau mobile privé, dans le présent mode de réalisation décrit, un réseau de type WiFi et *(ii)* du débit d'un flux UMA voix. Les débits sont donc calculés au niveau radio.

La "business zone" 19 possède un ou plusieurs réseaux définis respectivement par leur point d'accès $15_1$, $15_2$, $15_3$, $15_4$ respectifs conformes à la norme 802.11b/g.

Le débit nominal d'un réseau WiFi est noté dans la suite Dwlan.

A l'instant $t$ le débit d'un réseau WiFi est noté D(t) et à ce même instant $t$, le nombre maximal de flux transmis est calculé sur le réseau WiFi de la façon suivante :

$$D(t) = (\text{Débit des flux UMA voix})(t) + (\text{Débit des flux UMA data})(t) + (\text{Débit des flux d'établissement des tunnels IPsec})(t) + (\text{Débit de maintien des tunnels IPsec})(t) + (\text{Débit de divers flux})(t).$$

A l'instant t, le nombre maximal de flux UMA est donc tel que :

$$(\text{Débit des flux UMA})(t) = D(t).$$

A un instant $tk$ correspondant à une tentative d'établissement d'une nouvelle connexion, le réseau WiFi transmet déjà (k -1) flux UMA voix et donc, la possibilité d'ajouter le flux UMA voix numéro $k$ nécessite de connaître la valeur de débit maximal que va occuper ce flux sur le réseau WiFi.

d) Calcul du débit maximal du flux UMA voix n° $k$ :

Le débit au niveau radio du flux UMA voix numéro $k$, noté "débit du flux UMA voix n° $k$", est égal au nombre de paquets par seconde émis par le codec multiplié par la longueur d'un paquet au niveau radio. L'émission d'une trame WiFi contenant un échantillon de voix sur IP (VoIP) est équivalente à l'émission d'une trame WiFi virtuelle contenant cet échantillon, ce qui implique qu'au niveau radio, le débit du flux UMA voix numéro k est alors égal à :

$$(\text{débit du flux UMA voix n° k})(t) = R_k(t)*(\text{longueur (trame WiFi n° k)} + \text{longueur(acquittement de trame)} + t_{sifs}*\text{Dwlan}),$$

où $t_{sifs}$ correspond à la durée de l'espace court inter trame (sifs = "Short Inter Frame Space" en anglais, ou "interval court inter-trame" en français).

e) Ajout du flux UMA voix n° $k$ sur le réseau WiFi :

On suppose que le flux UMA voix n° i est transmis sur le réseau WiFi depuis l'instant $t_i$.

A l'instant $t_k$ l'ajout du flux UMA voix n° $k$ sur le réseau 11 WLAN - WiFi est donc possible si l'équation *EQ2* est vérifiée :

$$\Sigma i \, (\text{débit du flux UMA voix n° i})_{\text{mesuré en uplink entre [ti, tk]}} + \Sigma i \, (\text{débit du flux UMA voix n° i})_{\text{mesuré en downlink entre [ti, tk]}} + (\text{débit du flux UMA voix uplink n° k})_{\text{max}} + (\text{débit du flux UMA voix downlink n° k})_{\text{max}} < D(tk)$$

f) Etablissement d'une nouvelle communication entre un terminal de communication 13 du réseau 10 WLAN et un terminal 14 reconnu du réseau 11 WAN :

A l'instant $tk$ correspondant à un instant de demande d'établissement d'une nouvelle communication voix entre un terminal 13 de communication du réseau 10 local sans fil (par exemple un réseau WiFi) et un terminal 14 de communication reconnu par le réseau 11 WAN, l'ajout du flux UMA voix n° k sur le canal 17 virtuel conversationnel est alors possible si les équations *EQ1* et *EQ2* sont vérifiées. Il existe donc deux scénarii d'ajout d'un flux suivant qu'il s'agit d'un appel sortant ou d'un appel entrant.

Si l'une au moins des deux équations *EQ1* et *EQ2* n'est pas vérifiée, cela signifie que l'ajout d'un flux UMA voix n°*k* pour le support d'une nouvelle communication (cas d'un appel entrant ou sortant, indépendamment) dont l'établissement est demandé, à un instant $t_k$, n'est pas possible, sans une dégradation sensible de la qualité de service du services de VoIP rendue aux utilisateurs de l'architecture UMA de la figure 1, en cours de communication.

Dans une telle situation, on procède alors à un basculement sans coupure de la communication en cours d'établissement (procédure de "handover" selon la terminologie anglophone communément adoptée) sur le réseau mobile d'un opérateur.

- Cas d'un appel entrant, initié depuis un terminal 14 de communication, à destination d'un terminal 13 de communication :

Comme illustré sur la figure 2, lorsque l'équipement 12 d'interface reçoit sur son interface WAN un message de type requête CAC UMA concernant le canal 17 virtuel conversationnel, il vérifie l'équation *EQ1* précitée (étape S1).

Si l'équation *EQ1* est fausse, l'équipement 12 d'interface transmet un message de réponse CAC UMA concernant le canal 17 virtuel conversationnel, dont le champ "Status Code" est positionné à la valeur "Deny" (refus d'ajout d'un nouveau flux UMA voix) à destination du point d'accès $15_1$, dans la zone de couverture duquel se situe un terminal 13 avec lequel un terminal 14 cherche à entrer en communication (étape S2). En conséquence, le flux UMA voix n° k n'est alors pas transmis sur l'interface LAN du dispositif d'interface 12.

La communication doit alors être établie sans passer par l'architecture UMA, mais en s'appuyant, par exemple sur le réseau GSM d'un opérateur (étape S3).

Dans la situation inverse, si l'équation *EQ1* est vérifiée, alors l'équipement 12 d'interface ajoute le flux UMA voix numéro *k* dans une table de gestion et de référencement des flux UMA voix transitant sur la canal 17 virtuel conversationnel, puis transmet un message de réponse CAC UMA concernant le canal 17 virtuel conversationnel, dont le champ "Status Code" est positionné à la valeur "Accept" (ajout du champ accepté) à destination du point d'accès $15_1$ (AP), dans la zone de couverture duquel se situe un terminal 13 avec lequel un terminal 14 cherche à entrer en communication (étape S4).

Lorsque l'AP $15_1$ reçoit un message de réponse CAC UMA concernant le canal 17 virtuel conversationnel, il vérifie la valeur du champ "Status Code".

Si ce champ contient la valeur "Deny", l'AP $15_1$ transmet, conformément au standard WMM, un message de réponse ADDTS ayant le champ "Status Code" positionné à la valeur "Deny" à destination du terminal 13 (étape S5).

Si au contraire le champ "Status Code" contient la valeur "Accept", l'AP $15_1$ vérifie l'équation *EQ2*.

Lorsque le point d'accès $15_1$ reçoit un message de requête "CAC UMA WLAN request", si la table des codecs des terminaux stockée au niveau du point d'accès $15_1$ ne contient pas les paramètres du codec nécessaires à la vérification de l'équation *EQ2*, le point d'accès $15_1$ émet un message de requête "ADD codec in CODEC TABLE IN AP request" à destination du dispositif d'interface, pour recevoir les paramètres du codec correspondants stockés dans la table des codecs des terminaux du dispositif d'interface.

Lorsque le dispositif d'interface reçoit un tel message de requête "ADD codec in CODEC TABLE IN AP request", il doit émettre un message de réponse "ADD codec in CODEC TABLE IN AP response" à destination du point d'accès, ledit message contenant les paramètres de codec requis par le point d'accès (étape S7).

Si l'équation EQ2 est vérifiée, le point d'accès $15_1$ ajoute le flux UMA voix numéro *k* dans la table des flux UMA voix du réseau 10 WiFi, puis transmet, conformément au standard WMM, un message de réponse ADDTS ayant le champ "Status Code" positionné à la valeur "Accept" à destination du terminal 13 (étape S6).

La communication 100 est alors établie, de bout en bout, via l'architecture UMA de la figure 1, entre le terminal 13 de communication du réseau 10 WLAN et le terminal 14 de communication rattaché au réseau 11 WAN.

Dans le cas contraire, lorsqu'un terminal 13 de communication, conforme à la spécification UMA, reçoit un message de réponse ADDTS ayant son champ "Status Code" positionné à la valeur "Deny" *(i)* il peut chercher un autre AP disponible, parmi les AP $15_2$ à $15_4$, ou bien *(ii)* il peut initier une procédure de basculement automatique, sans coupure (procédure de "handover") vers le réseau GSM d'un opérateur (étape S3).

- Cas d'un appel sortant, initié depuis un terminal 13 de communication, à destination d'un terminal 14 de communication :

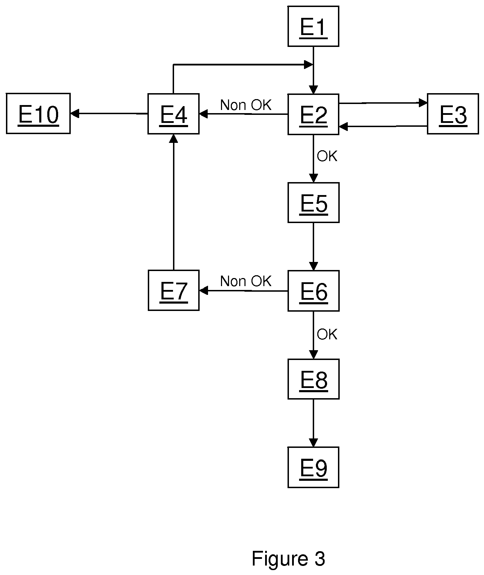

Comme illustré sur l'ordinogramme de la figure 3, à un instant $t_k$ correspondant un l'initiation d'un appel sortant par une terminal 13 du réseau WLAN, en vue de l'établissement d'une nouvelle communication avec un terminal 14 distant, reconnu d'un réseau 11 WAN, conformément à la spécification WMM™, un terminal émet un message contenant une requête ADDTS destinée à réserver des ressources sur son le réseau WiFi auquel le terminal 13 est rattaché (étape E1), pour le flux UMA voix numéro *k,* destiné à supporté cette nouvelle communication.

A la réception de ce message, l'AP $15_1$ doit vérifier l'équation *EQ2* (étape E2).

Si la table des codecs des terminaux administrée par l'AP $15_1$ ne contient pas les paramètres du codec du terminal 13, nécessaires à la vérification de l'équation *EQ2,* l'AP $15_1$ émet un message de demande de récupération de la valeur du codec correspondant au terminal 13, à destination de l'équipement 12 d'interface (étape E3).

Conformément à la présente invention, ce dernier renvoie alors à l'AP $15_1$ un message de réponse contenant la valeur du codec requise, cette dernière étant intégrée à la table des codecs de l'AP $15_1$.

Si l'équation *EQ2* est fausse, l'AP $15_1$ transmet, conformément à la spécification WMM™, un message de réponse ADDTS avec un champ "Status Code" positionné à la valeur "Deny", à destination du terminal 13 de communication (étape E4).

Au contraire, si l'équation *EQ2* est vérifiée, l'AP $15_1$ transmet un message de requête de CAC UMA concernant le canal 17 virtuel conversationnel à destination de l'équipement 12 d'interface (étape E5).

Lorsque ce dernier 12 ce dernier message, il vérifie l'équation *EQ1* (étape E6).

Si l'équation *EQ1* est fausse, l'équipement 12 d'interface transmet un message de réponse CAC UMA concernant le canal 17 virtuel avec un champ "Status Code" positionné à la valeur "Deny" à destination de l'AP $15_1$ (étape E7).

Si au contraire l'équation *EQ1* est vérifiée, l'équipement 12 ajoute le flux UMA voix numéro *k* dans sa table des flux UMA voix relative aux flux UMA transitant sur le canal 17 virtuel, puis transmet un message de réponse CAC UMA ayant le champ "Status Code" positionné à la valeur "Accept" à destination de l'AP $15_1$ (étape E8).

Lorsque l'AP $15_1$ reçoit un message de réponse CAC UMA concernant le canal 17 virtuel avec une valeur du champ "Status Code" positionnée à "Deny", l'AP $15_1$ transmet, conformément à la spécification WMM™, un message de réponse ADDTS avec un champ "Status Code" positionné à la valeur "Deny" à destination du terminal 13 (étape E4).

Si le champ "Status Code" de ce dernier message contient la valeur "Accept", l'AP $15_1$ ajoute le flux UMA voix n° *k* dans la table des flux UMA voix du réseau 10 WiFi, puis transmet, conformément à la spécification WMM™, un message de réponse ADDTS ayant le champ "Status Code" positionné à la valeur "Accept" à destination du terminal (étape E9).

Dans ce cas, la communication 100 est alors établie au travers l'architecture UMA de la figure 1.

En revanche, lorsqu'un terminal 13 UMA reçoit un message de réponse ADDTS avec un champ "Status Code" positionné à la valeur "Deny" soit *(i)* il peut chercher un autre AP $15_2$, $15_3$ ou $15_4$ si le premier $15_1$ n'était pas disponible, soit *(ii)* il peut initier une procédure de basculement automatique et sans coupure (procédure de "handover") vers le réseau GSM d'un opérateur (étape E10).

## Revendications

1. Procédé de calcul dynamique d'une valeur de débit maximal d'un flux de données pouvant transiter entre un premier terminal (13) de communication et un deuxième terminal (14) de communication, afin d'établir une nouvelle communication entre lesdits premier et second terminaux, ledit premier terminal appartenant à un premier réseau de communication et ledit second terminal appartenant à un second réseau de communication, lesdits premier et second réseaux étant d'un type différent et étant interconnectés par un dispositif d'interface ; ledit procédé étant **caractérisé en ce que** ledit calcul dynamique comprend une étape de prise en compte d'au moins un paramètre représentatif d'une opération de codage-décodage devant être appliquée audit flux de données et exécutée par un codeur-décodeur associé audit premier terminal (13).

2. Procédé selon la revendication 1, **caractérisé en ce que** ledit procédé comprend une étape de prise en compte d'au moins un paramètre représentatif du type dudit codeur-décodeur.

3. Procédé selon l'une des revendications 1 et 2, **caractérisé en ce que** ledit procédé comprend une étape de prise en compte d'au moins un paramètre représentatif d'un mode de fonctionnement dudit codeur-décodeur.

4. Procédé selon la revendication 3, **caractérisé en ce que** ladite étape de prise en compte inclut une étape d'interrogation d'au moins une table indiquant pour chaque terminal connecté et identifié de manière unique, au moins une valeur dudit au moins un paramètre représentatif du mode de fonctionnement dudit codeur-décodeur qui lui est associé.

5. Procédé selon la revendication 3, **caractérisé en ce que** ledit dispositif (12) d'interface inclut une table centrale comprenant pour chaque terminal (13) connecté audit premier réseau (10) :

- une adresse de connexion dudit premier terminal (13) sur ledit premier réseau de communication;
- une adresse d'un point d'accès auquel ledit premier terminal (13) est connecté;
- au moins un paramètre représentatif du mode de fonctionnement d'un codeur-décodeur associé audit terminal (13) de communication pour traiter ledit flux.

**6.** Procédé selon la revendication 5, **caractérisé en ce que** ladite table centrale est mise à jour dynamiquement au moyen d'un message de sollicitation adressé par un premier terminal (13) audit dispositif (12) d'interface, ledit message comprenant au moins les champs d'information suivants:

- un identifiant d'un codeur-décodeur dudit flux de données associé audit terminal (13) émetteur dudit message ;
- une valeur de temps nécessaire audit codeur-décodeur associé audit terminal (13) émetteur, pour coder-décoder chacun des paquets de données de taille prédéterminée formant ledit flux de données ;
- une valeur représentative du nombre d'octets correspondant à chacun desdits paquets de données de taille prédéterminée que ledit codeur-décodeur associé audit terminal (13) émetteur doit coder-décoder.

**7.** Procédé selon l'une quelconque des revendications 1 à 6, **caractérisé en ce que** ledit premier réseau (10) comprenant une pluralité de points d'accès ($15_1$, $15_2$, $15_3$, $15_4$) accessibles audit premier terminal (13), chacun desdits points d'accès ($15_1$, $15_2$, $15_3$, $15_4$) inclut une table locale comprenant:

- une adresse de connexion dudit premier terminal (13) sur ledit premier réseau de communication;
- au moins un paramètre représentatif du mode de fonctionnement d'un codeur-décodeur associé audit terminal (13) pour traiter ledit flux.

**8.** Procédé selon la revendication 6, **caractérisé en ce que** lorsque ledit message de sollicitation est porteur d'une demande de réservation de ressources qui ne peut être satisfaite pour l'émission d'un flux de données par un point d'accès émetteur dudit message, une étape d'émission automatique d'un message de sollicitation de ressource par au moins un autre point d'accès auquel ledit terminal (13) de communication peut se connecter est déclenchée.

**9.** Procédé selon les revendications 7 et 8, **caractérisé en ce que** si ladite table locale dudit point d'accès auquel ledit terminal (13) est connecté ne contient pas au moins un paramètre représentatif dudit mode de fonctionnement d'un codeur-décodeur associé audit terminal (13) pour traiter ledit flux, ledit point d'accès émet une requête de récupération dudit paramètre à destination dudit dispositif d'interface, pour récupérer dans ladite table locale, les données correspondantes contenues dans ladite table centrale dudit dispositif d'interface.

**10.** Procédé selon l'une quelconque des revendications 1 à 9, **caractérisé en ce que** ledit premier terminal (13) de communication étant conforme au standard UMA, ledit flux de données transitant entre ledit premier terminal (13) de communication et ledit deuxième terminal (14) de communication est un flux de données voix au format UMA.

**11.** Dispositif de calcul dynamique d'une valeur de débit maximal d'un flux de données pouvant transiter entre un premier terminal (13) de communication et un deuxième terminal (14) de communication, afin d'établir une nouvelle communication entre lesdits premier et second terminaux, ledit premier terminal appartenant à premier réseau de communication et ledit second terminal appartenant à un second réseau de communication, lesdits premier et second réseaux étant d'un type différent et étant interconnecté par un dispositif d'interface ; ledit dispositif étant **caractérisé en ce qu'**il comprend des moyens de prise en compte d'au moins un paramètre représentatif d'une opération de codage-décodage devant être appliquée audit flux de données et exécutée par un codeur-décodeur associé audit premier terminal (13).

**12.** Système de communication entre au moins un premier terminal (13) de communication appartenant à un premier réseau (10) de communication et au moins un deuxième terminal (14) de communication appartenant à un deuxième réseau (11) de communication, lesdits premier (10) et deuxième (11) réseaux étant d'un type différent et étant reliés entre eux via un dispositif (12) d'interface, **caractérisé en ce qu'**il comprend:

- des moyens de calcul dynamique, selon un procédé conforme à l'une quelconque des revendications 1 à 9, d'une valeur de débit maximal d'un flux de données pouvant transiter entre ledit premier (13) et ledit deuxième (14) terminal de communication afin d'établir une nouvelle communication entre lesdits premier et second terminaux ;
- des moyens de traitement d'une requête d'admission d'un nouveau flux de données devant transiter entre lesdits premier (13) et deuxième (14) terminaux de communication, lesdits moyens traitement étant contenus dans ledit dispositif (12) d'interface et tenant compte du résultat produit par lesdits moyens de calcul.

**13.** Système de communication selon la revendication 12, **caractérisé en ce que** ledit premier (13) terminal de communication étant conforme au standard défini par la nonne UMA, ledit flux de données devant transiter entre ledit premier (13) et ledit deuxième (14) terminal de communication est du type flux de données voix au format UMA.

**14. Produit programme** d'ordinateur téléchargeable depuis un réseau de communication et/ou stocké sur un support d'information lisible par ordinateur et/ou exécutable par un microprocesseur, **caractérisé en ce qu'**il comprend des instructions de code pour l'exécution d'un procédé de calcul dynamique conforme à l'une quelconque des revendications 1 à 9.

**Patentansprüche**

1. Verfahren zur dynamischen Berechnung eines Werts einer maximalen Übertragungsrate eines Datenstroms, der zwischen einem ersten Kommunikationsendgerät (13) und einem zweiten Kommunikationsendgerät (14) übertragen werden kann, um eine neue Kommunikation zwischen dem ersten und dem zweiten Endgerät aufzubauen, wobei das erste Endgerät zu einem ersten Kommunikationsnetz gehört, und das zweite Endgerät zu einem zweiten Kommunikationsnetz gehört, wobei das erste und das zweite Netz von unterschiedlicher Art und über eine Schnittstellenvorrichtung miteinander verbunden sind; wobei das Verfahren **dadurch gekennzeichnet ist, dass** die dynamische Berechnung einen Schritt der Berücksichtigung mindestens eines Parameters enthält, der für einen Codier-Decodier-Vorgang repräsentativ ist, der an den Datenstrom angewendet und von einem Codierer-Decodierer ausgeführt werden soll, der dem ersten Endgerät (13) zugeordnet ist.

2. Verfahren nach Anspruch 1, **dadurch gekennzeichnet, dass** das Verfahren einen Schritt der Berücksichtigung mindestens eines Parameters enthält, der für die Art des Codierer-Decodierers repräsentativ ist.

3. Verfahren nach einem der Ansprüche 1 und 2, **dadurch gekennzeichnet, dass** das Verfahren einen Schritt der Berücksichtigung mindestens eines Parameters enthält, der für eine Betriebsart des Codierer-Decodierers repräsentativ ist.

4. Verfahren nach Anspruch 3, **dadurch gekennzeichnet, dass** der Berücksichtigungsschritt einen Schritt der Abfrage mindestens einer Tabelle umfasst, die für jedes angeschlossene und einzeln identifizierte Endgerät mindestens einen Wert des mindestens einen Parameters anzeigt, der für die Betriebsart des ihm zugeordneten Codierer-Decodierers repräsentativ ist.

5. Verfahren nach Anspruch 3, **dadurch gekennzeichnet, dass** die Schnittstellenvorrichtung (12) eine zentrale Tabelle umfasst, die für jedes an das erste Netz (10) angeschlossene Endgerät (13) enthält:

   • eine Anschlussadresse des ersten Endgeräts (13) an das erste Kommunikationsnetz;
   • eine Adresse eines Zugangspunkts, an den das erste Endgerät (13) angeschlossen ist;
   • mindestens einen Parameter, der für die Betriebsart eines dem Kommunikationsendgerät (13) zugeordneten Codierer-Decodierers zur Bearbeitung des Stroms repräsentativ ist.

6. Verfahren nach Anspruch 5, **dadurch gekennzeichnet, dass** die zentrale Tabelle mittels einer Beanspruchungsnachricht dynamisch aktualisiert wird, die von einem ersten Endgerät (13) an die Schnittstellenvorrichtung (12) gerichtet wird, wobei die Nachricht mindestens die folgenden Informationsfelder enthält:

   • eine Kennung eines Codierer-Decodierers des Datenstroms, der dem die Nachricht sendenden Endgerät (13) zugeordnet ist;
   • einen Wert der Zeit, die für den dem Sende-Endgerät (13) zugeordneten Codierer-Decodierer notwendig ist, um jedes der Datenpakete vorbestimmter Größe zu decodieren, die den Datenstrom bilden;
   • einen Wert, der für die Anzahl von Bytes repräsentativ ist, die jedem der Datenpakete vorbestimmter Größe entsprechen, die der dem Sende-Endgerät (13) zugeordnete Codierer-Decodierer codieren-decodieren soll.

7. Verfahren nach einem der Ansprüche 1 bis 6, **dadurch gekennzeichnet, dass**, da das erste Netz (10) eine Vielzahl von für das erste Endgerät (13) zugänglichen Zugangspunkten ($15_1$, $15_2$, $15_3$, $15_4$) enthält, jeder der Zugangspunkte ($15_1$, $15_2$, $15_3$, $15_4$) eine lokale Tabelle umfasst, die enthält:

   • eine Anschlussadresse des ersten Endgeräts (13) an das erste Kommunikationsnetz;
   • mindestens einen Parameter, der für die Betriebsart eines dem Endgerät (13) zugeordneten Codierer-Decodierers zur Bearbeitung des Stroms repräsentativ ist.

8. Verfahren nach Anspruch 6, **dadurch gekennzeichnet, dass**, wenn die Beanspruchungsnachricht eine Anforderung der Reservierung von Ressourcen trägt, die für das Senden eines Datenstroms durch einen die Nachricht sendenden Zugangspunkt nicht erfüllt werden kann, ein Schritt des automatischen Sendens einer Ressource-Beanspruchungsnachricht durch mindestens einen anderen Zugangspunkt, an den das Kommunikationsendgerät (13) angeschlossen werden kann, ausgelöst wird.

9. Verfahren nach den Ansprüchen 7 und 8, **dadurch gekennzeichnet, dass**, wenn die lokale Tabelle des Zugangspunkts, an den das Endgerät (13) angeschlossen ist, nicht mindestens einen Parameter enthält, der für die Betriebsart eines dem Endgerät (13) zugeordneten Codierer-Decodierers zur Bearbeitung des Stroms repräsentativ ist, der Zugangspunkt einen Wiedergewinnungsantrag des Parameters an die Schnittstellenvorrichtung sendet, um in der lokalen Tabelle die entsprechenden Daten wiederzugewinnen, die in der zentralen Tabelle der Schnittstellenvorrichtung enthalten sind.

10. Verfahren nach einem der Ansprüche 1 bis 9, **dadurch gekennzeichnet, dass**, da das erste Kommunikationsendgerät (13) dem Standard UMA entspricht, der zwischen dem ersten Kommunikationsendgerät (13) und dem zweiten Kommunikationsendgerät (14) übertragene Datenstrom ein Sprachdatenstrom im Format UMA ist.

11. Vorrichtung zur dynamischen Berechnung eines Werts einer maximalen Übertragungsrate eines Datenstroms, der zwischen einem ersten Kommunikationsendgerät (13) und einem zweiten Kommunikationsendgerät (14) übertragen werden kann, um eine neue Kommunikation zwischen dem ersten und dem zweiten Endgerät aufzubauen, wobei das erste Endgerät zu einem ersten Kommunikationsnetz gehört, und das zweite Endgerät zu einem zweiten Kommunikationsnetz gehört, wobei das erste und das zweite Netz von unterschiedlicher Art und über eine Schnittstellenvorrichtung miteinander verbunden sind; wobei die Vorrichtung **dadurch gekennzeichnet ist, dass** sie Einrichtungen zur Berücksichtigung mindestens eines Parameters enthält, der für einen Codier-Decodier-Vorgang repräsentativ ist, der an den Datenstrom angewendet und von einem dem ersten Endgerät (13) zugeordneten Codierer-Decodierer ausgeführt werden soll.

12. Kommunikationssystem zwischen mindestens einem ersten Kommunikationsendgerät (13), das zu einem ersten Kommunikationsnetz (10) gehört, und mindestens einem zweiten Kommunikationsendgerät (14), das zu einem zweiten Kommunikationsnetz (11) gehört, wobei das erste (10) und das zweite (11) Netz von unterschiedlicher Art und miteinander über eine Schnittstellenvorrichtung (12) verbunden sind, **dadurch gekennzeichnet, dass** es enthält:

• Einrichtungen zur dynamischen Berechnung, gemäß einem Verfahren entsprechend einem der Ansprüche 1 bis 9, eines Werts der maximalen Übertragungsrate eines Datenstroms, der zwischen dem ersten (13) und dem zweiten (14) Kommunikationsendgerät übertragen werden kann, um eine neue Kommunikation zwischen dem ersten und dem zweiten Endgerät aufzubauen;
• Einrichtungen zur Verarbeitung eines Zulassungsantrags eines neuen Datenstroms, der zwischen dem ersten (13) und dem zweiten (14) Kommunikationsendgerät übertragen werden soll, wobei die Verarbeitungseinrichtungen in der Schnittstellenvorrichtung (12) enthalten sind und das von den Recheneinrichtungen erzeugte Ergebnis berücksichtigen.

13. Kommunikationssystem nach Anspruch 12, **dadurch gekennzeichnet, dass**, da das erste Kommunikationsendgerät (13) dem durch die Norm UMA definierten Standard entspricht, der Datenstrom, der zwischen dem ersten (13) und dem zweiten (14) Kommunikationsendgerät übertragen werden soll, von der Art Sprachdatenstrom im Format UMA ist.

14. Computerprogrammprodukt, das von einem Kommunikationsnetz heruntergeladen und/oder auf einem computerlesbaren Informationsträger gespeichert und/oder von einem Mikroprozessor ausgeführt werden kann, **dadurch gekennzeichnet, dass** es Codeanweisungen zur Ausführung eines Verfahrens zur dynamischen Berechnung nach einem der Ansprüche 1 bis 9 enthält.

**Claims**

1. **Method** for the dynamic calculation of a maximum throughput value of a data flow able to transit between a first communication terminal (13) and a second communication terminal (14), in order to establish a new communication between said first and second terminals, said first terminal belonging to a first communication network and said second terminal belonging to a second communication network, said first and second networks being of a different type and being interconnected by an interface device; said method being **characterized in that** said dynamic calculation comprises a step of taking into account at least one parameter representative of an encoding-decoding operation having to be applied to said data flow and executed by an encoder-decoder associated with said first terminal (13).

2.  Method according to Claim 1, **characterized in that** said method comprises a step of taking into account at least one parameter representative of the type of said encoder-decoder.

3.  Method according to either of Claims 1 and 2, **characterized in that** said method comprises a step of taking into account at least one parameter representative of an operating mode of said encoder-decoder.

4.  Method according to Claim 3, **characterized in that** said taking into account step includes a step of interrogating at least one table indicating, for each connected and uniquely identified terminal, at least one value of said at least one parameter representative of the operating mode of said encoder-decoder that is associated therewith.

5.  Method according to Claim 3, **characterized in that** said interface device (12) includes a central table comprising, for each terminal (13) connected to said first network (10):

    ▪ a connection address of said first terminal (13) on said first communication network;
    ▪ an address of an access point to which said first terminal (13) is connected;
    ▪ at least one parameter representative of the operating mode of an encoder-decoder associated with said communication terminal (13) for processing said flow.

6.  Method according to Claim 5, **characterized in that** said central table is updated dynamically by way of a solicitation message addressed, by a first terminal (13), to said interface device (12), said message comprising at least the following information fields:

    ▪ an identifier of an encoder-decoder of said data flow associated with said terminal (13) sending said message;
    ▪ a value of time necessary for said encoder-decoder associated with said sending terminal (13) to encode-decode each of the data packets of predetermined size forming said data flow;
    ▪ a value representative of the number of bytes corresponding to each of said data packets of predetermined size that said encoder-decoder associated with said sending terminal (13) has to encode-decode.

7.  Method according to any one of Claims 1 to 6, **characterized in that** said first network (10) comprises a plurality of access points ($15_1$, $15_2$, $15_3$, $15_4$) that are accessible to said first terminal (13), each of said access points ($15_1$, $15_2$, $15_3$, $15_4$) including a local table comprising:

    ▪ a connection address of said first terminal (13) on said first communication network;
    ▪ at least one parameter representative of the operating mode of an encoder-decoder associated with said terminal (13) for processing said flow.

8.  Method according to Claim 6, **characterized in that**, when said solicitation message carries a resources reservation request that is not able to be met for the transmission of a data flow by an access point sending said message, a step of automatically sending a resource solicitation message by at least one other access point to which said communication terminal (13) is able to connect is triggered.

9.  Method according to Claims 7 and 8, **characterized in that**, if said local table of said access point to which said terminal (13) is connected does not contain at least one parameter representative of said operating mode of an encoder-decoder associated with said terminal (13) for processing said flow, said access point sends a request to recover said parameter to said interface device in order to recover, in said local table, the corresponding data contained in said central table of said interface device.

10. Method according to any one of Claims 1 to 9, **characterized in that**, said first communication terminal (13) complying with the UMA standard, said data flow transiting between said first communication terminal (13) and said second communication terminal (14) is a voice data flow in UMA format.

11. **Device** for the dynamic calculation of a maximum throughput value of a data flow able to transit between a first communication terminal (13) and a second communication terminal (14), in order to establish a new communication between said first and second terminals, said first terminal belonging to a first communication network and said second terminal belonging to a second communication network, said first and second networks being of a different type and being interconnected by an interface device; said device being **characterized in that** it comprises means for taking into account at least one parameter representative of an encoding-decoding operation having to be applied to said data flow and executed by an encoder-decoder associated with said first terminal (13) .

12. **System** for communication between at least one first communication terminal (13) belonging to a first communication network (10) and at least one second communication terminal (14) belonging to a second communication network (11), said first (10) and second (11) networks being of a different type and being linked to one another via an interface device (12), **characterized in that** it comprises:

- means for the dynamic calculation, in accordance with a method according to any one of Claims 1 to 9, of a maximum throughput value of a data flow able to transit between said first (13) and said second (14) communication terminal, in order to establish a new communication between said first and second terminals;
- means for processing a request to admit a new data flow having to transit between said first (13) and second (14) communication terminals, said processing means being contained in said interface device (12) and taking into account the result produced by said calculating means.

13. Communication system according to Claim 12, **characterized in that**, said first communication terminal (13) complying with the standard defined by the UMA standard, said data flow having to transit between said first (13) and said second (14) communication terminal is of voice data flow type in UMA format.

14. Computer **program product** downloadable from a communication network and/or stored on a computer-readable information medium and/or able to be executed by a microprocessor, **characterized in that** it comprises code instructions for executing a dynamic calculation method according to any one of Claims 1 to 9.

Figure 1

Figure 2

Figure 3

**EP 2 127 271 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *Dynamic Host Configuration Protocol,* Mars 1997